# FASCICULE DE BREVET EUROPEEN

(11) **EP 0 662 894 B1**
(45) Date de publication et mention de la délivrance du brevet: **21.02.1996**
(21) Numéro de dépôt: 93920910.2
(22) Date de dépôt: 22.09.1993
(51) Int. Cl.: B60T 13/565, B60T 13/569

(54) **DISPOSITIF DE FREINAGE ASSISTE A REACTION HYDRAULIQUE RALENTIE**
BREMSKRAFTVERSTÄRKER MIT VERZÖGERTER HYDRAULISCHER REAKTION
DELAYED HYDRAULIC REACTION TYPE POWER BRAKING SYSTEM

(30) Priorité: 30.09.1992 FR 9211625; 21.01.1993 FR 9300571
(43) Date de publication de la demande: 19.07.1995
(73) Titulaire: ALLIEDSIGNAL EUROPE SERVICES TECHNIQUES, F-93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR); LEVRAI, Roland, F-93240 Stains (FR)
(86) Numéro de dépôt international: FR9300914
(87) Numéro de publication internationale: WO9407722

(56) Documents cités:
- EP-A- 0 257 360
- EP-A- 0 337 473
- FR-A- 2 558 126
- US-A- 3 470 695

## Description

La présente invention concerne un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de ladite force d'entrée sur une tige de commande contrôlant l'ouverture d'un clapet, pour exercer ladite force d'actionnement sur le piston hydraulique principal, le servomoteur comportant une enveloppe rigide séparée de façon étanche en deux chambres au moyen au moins d'une cloison mobile, susceptible d'être sollicitée par une différence de pression entre les deux chambres résultant de l'ouverture du clapet et d'entraîner un piston pneumatique, mobile par rapport à l'enveloppe, portant ledit clapet et contribuant au moins à transmettre ladite force d'assistance, le piston hydraulique principal du maître-cylindrique comportant lui-même un cylindre mobile, creux, recevant une partie au moins de la force d'assistance, et à l'intérieur duquel coulisse, de façon étanche et suivant la direction axiale, un piston hydraulique secondaire susceptible de revoir au moins ladite force d'entrée.

Un dispositif de ce type est bien connu dans l'art antérieur et se trouve par exemple décrit dans le brevet US 4 491 058 ou dans le document FR-A-2 558 126.

Un tel dispositif, utilisant un piston pneumatique mobile, présente l'avantage d'offrir à la pédale de frein une course importante au freinage, ce qui permet un contrôle optimal de la décélération du véhicule.

Cependant, la généralisation de systèmes de freinage à régulation électronique, destinés à empêcher le blocage et/ou le patinage des roues, fait apparaître de nouvelles contraintes sur les temps de réponse du sous-ensemble mécanique et hydraulique, le sous-ensemble électronique ayant quant à lui des temps de réponse extrêmement courts.

Dans ce contexte, l'invention a précisément pour but de réduire le temps de réponse d'un dispositif de freinage assisté.

A cette fin, le dispositif de l'invention est essentiellement caractérisé en ce qu'une ouverture au moins est pratiquée dans le cylindre mobile pour faire communiquer l'intérieur de ce dernier avec l'intérieur du maître-cylindre, et en ce qu'un réducteur sélectif de débit est prévu dans cette ouverture pour opposer, à une circulation de fluide de freinage depuis le maître-cylindre vers le cylindre mobile, et à une circulation en sens inverse, des première et seconde pertes de charge respectives dont la première est supérieure à la seconde.

Grâce à cette disposition, le piston hydraulique secondaire, lors d'une action de freinage brusque, ne reçoit la réaction de la pression interne du maître-cylindre que de façon progressive et différée.

Ceci a pour résultat premier que la tige de commande se trouve plus longtemps en position relativement avancée, en direction du maître-cylindre, par rapport au piston pneumatique, ce qui permet par conséquent au clapet de se trouver plus largement ouvert plus longtemps, et à la force d'assistance de s'établir plus rapidement à une valeur élevée.

Dans un mode de réalisation aisé à mettre en oeuvre, plusieurs ouvertures sont pratiquées dans le cylindre mobile et le réducteur sélectif de débit est un clapet anti-retour installé sur l'une au moins de ces ouvertures.

De préférence, le dispositif comprend en outre une tige de poussée de longueur réglable disposée entre la tige de commande et le piston hydraulique secondaire.

D'autres caractéristiques et avantages de l'invention ressortiront clairement de la description qui en est faite ci-après, à titre indicatif et nullement limitatif, en référence aux dessins annexés sur lesquels :
- La Figure 1 est une vue en coupe partielle d'un dispositif conforme à un mode de réalisation de la présente invention.
- La Figure 2 est une vue en coupe partielle d'un dispositif conforme à une variante du mode de réalisation de la Figure 1.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 1 et un maître-cylindre 2.

Le servomoteur comprend lui-même une enveloppe rigide 3 séparée en deux chambres 3a et 3b, de façon étanche, par une cloison mobile 4 comprenant une membrane 4a et une jupe rigide 4b et susceptible d'entraîner un piston pneumatique 5 mobile à l'intérieur de l'enveloppe 3.

La chambre avant 3a, dont la face avant est fermée de façon étanche par le maître-cylindre 2, est en permanence raccordée à une source de dépression (non représentée) à travers une valve anti-retour 6.

La pression dans la chambre arrière 3b est contrôlée par un clapet 7, commandé par une tige de commande 8, laquelle est reliée à une pédale de frein (non représentée).

Lorsque la tige de commande 8 est en position de repos, en l'occurrence tirée vers la droite, le clapet 7 établit une communication entre les deux chambres 3a et 3b du servomoteur, ou vient d'une position dans laquelle cette communication a été établie.

La chambre arrière 3b étant alors soumise à la même dépression que la chambre avant 3a, le piston 5 est repoussé vers la droite, en position de repos, par un ressort 9.

L'actionnement de la tige de commande 8 vers la gauche a pour effet, dans un premier temps, de déplacer le clapet 7 de façon qu'il isole l'une de l'autre les chambres 3a et 3b puis, dans un deuxième temps, de déplacer ce clapet de façon qu'il ouvre la chambre arrière 3b à la pression atmosphérique.

La différence de pression entre les deux chambres alors ressentie par la membrane 4a exerce sur la cloison mobile 4 une poussée qui tend à la déplacer vers la gauche et à lui permettre d'entraîner le piston 5 qui se déplace à son tour en comprimant le ressort 9.

L'effort de freinage exercé sur la tige de commande 8, ou "force d'entrée" et l'effort d'assistance au freinage, ou "force d'assistance", résultant de la poussée de la cloison mobile 4, sont alors appliqués ensemble suivant l'axe 10 de la tige de poussée 8 en direction du maître-cylindre 2, et se conjuguent pour constituer la force d'actionnement de ce dernier.

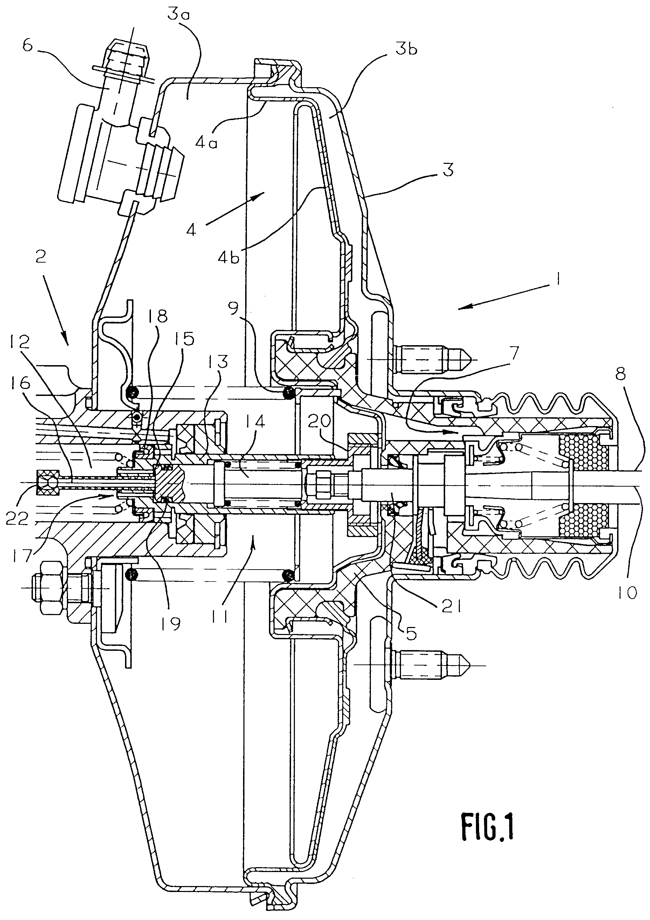

Plus précisément, la force d'actionnement est appliquée sur le piston hydraulique principal 11 du maître-cylindre et en provoque le déplacement vers la gauche (sur la figure 1), ce qui entraîne une élévation de pression du liquide de freinage présent dans le volume intérieur 12 du maître-cylindre, et un actionnement du frein relié à ce dernier.

Le piston hydraulique principal 11 est en fait composite et comprend d'une part un cylindre 13 mobile et creux, et d'autre part un piston hydraulique secondaire 14.

Le volume intérieur 15 du cylindre mobile 13 communique avec le volume intérieur 12 du maître-cylindre par l'intermédiaire d'ouvertures, telles que 16 et 17, ménagées dans le cylindre mobile suivant une direction axiale.

En dehors du passage de fluide que permettent ces ouvertures 16 et 17 entre le volume intérieur 12 du maître-cylindre 2 et celui du cylindre mobile 13, ce cylindre mobile 13 coulisse de façon étanche dans le maître-cylindre 2, l'étanchéité étant obtenue grâce au moins à un joint annulaire 18.

Le piston hydraulique secondaire 14, quant à lui, coulisse à l'intérieur du cylindre mobile 13, qu'il obture de façon étanche grâce à un joint annulaire 19.

Le cylindre mobile 13 est relié, à travers la bague 20, à la jupe rigide 4b de manière à recevoir une partie au moins de la force d'assistance exercée par l'intermédiaire de cette jupe.

Le piston hydraulique secondaire 14 est disposée axialement, en regard d'une tige de poussée 21 susceptible de lui transmettre au moins la force d'entrée exercée sur la tige de commande 8.

Le fonctionnement du dispositif décrit jusqu'à présent est le suivant.

Lorsqu'une force d'entrée est appliquée sur la tige de commande 8, après une course prédéterminée de la tige de poussée 8, le clapet 7 ouvre à l'atmosphère la chambre arrière 3b du servomoteur, préalablement isolée de la chambre avant 3a, et une force d'assistance est appliquée au cylindre mobile 13 par la jupe rigide 4b à travers la bague 20.

La pression hydraulique dans le volume interne 12 du maître-cylindre s'élève et s'établit, par circulation de fluide hydraulique à travers les ouvertures 16 et 17, dans le volume interne 15 du cylindre mobile, faisant ainsi apparaître, sur le piston hydraulique secondaire 14, une force de réaction dépendant de la force d'assistance, s' opposant à la force d'entrée, et permettant donc le contrôle de la première force par la seconde.

Selon l'invention, l'une ou moins des ouvertures 16 est pourvue d'un réducteur sélectif de débit 22 permettant de défavoriser le débit de fluide hydraulique susceptible de s'établir, depuis le volume intérieur 12 du maître-cylindre vers le volume intérieur 15 du cylindre mobile à travers les ouvertures qui les fait communiquer, par rapport au débit de fluide susceptible de s'établir en sens inverse, le premier débit mentionné faisant apparaître une perte de charge supérieure à celle à laquelle est soumis le second.

Selon un mode de réalisation très simple à mettre en oeuvre, le réducteur sélectif de débit 22 est, comme l'illustre la figure, constitué par un clapet anti-retour installé sur l'une au moins des ouvertures 16, 17 et interdisant le retour de fluide vers le cylindre mobile en provenance du maître-cylindre à travers cette ouverture.

Grâce à ces caractéristiques, le recul (vers la droite sur la figure 1) du piston hydraulique secondaire 14 dans le cylindre mobile 13 sous l'effet de la réaction hydraulique est moins rapide et instantanée que ne l'est l'enfoncement (vers la gauche) de ce piston hydraulique secondaire dans le cylindre mobile.

Il en résulte qu'au freinage, et notamment en cas de freinage brusque, la tige de commande 8 peut se trouver, par rapport au piston pneumatique 5, donc aussi par rapport au clapet 7 que porte ce dernier, dans une position plus enfoncée (vers la gauche sur la figure) et pendant un temps plus long, que dans les dispositifs de l'art antérieur.

Le clapet 7 peut donc être ouvert en grand de façon quasi-instantanée et y rester pendant le temps requis pour le remplissage de la chambre arrière 3b, ce temps étant d'ailleurs d'autant plus court que ce clapet, grâce à l'invention, peut être grand ouvert.

A ce titre, il peut être avantageux de prévoir que la tige de poussée 21 soit réglable en longueur, le réglage de celle-ci permettant le réglage de l'ouverture du clapet 7.

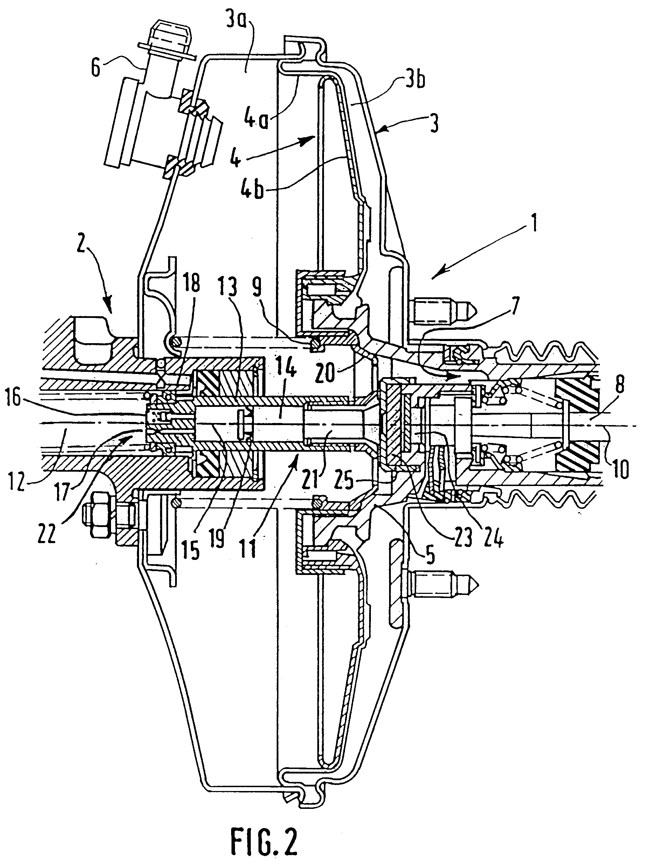

On a représenté sur la Figure 2 un dispositif de freinage assisté réalisé selon une variante du mode de réalisation qui vient d'être décrit. Sur cette Figure, les éléments identiques ou analogues à ceux qui viennent d'être décrits sont affectés des mêmes signes de référence.

On voit sur la Figure 2 que le piston hydraulique secondaire 14 est en fait constitué par le prolongement axial d'une tige de poussée 21 susceptible de lui transmettre d'une part la force d'entrée exercée sur la tige de commande 8 et d'autre part une fraction de la force d'assistance développée par le piston pneumatique 5, ces forces étant transmises, de façon en soi connue, par l'intermédiaire d'un disque de réaction 23 sur une face duquel s'appuient ce piston pneumatique et un palpeur 24 actionné par la tige de commande, et dont l'autre face s'appuie sur une coupelle 25 solidaire de la tige de poussée 21.

Lors de l'actionnement du dispositif, la pression hydraulique dans le volume interne 12 du maître-cylindre s'élève et s'établit par circulation de fluide hydraulique à travers le passage 17 dans le volume interne 15 du cylindre mobile, faisant ainsi apparaître, sur le piston hydraulique secondaire 14, une force de réaction dépendant de la force d'assistance, s'opposant à la force transmise à travers le disque de réaction 23, et permettant le contrôle de la force d'assistance par la force d'entrée.

Comme dans le mode de réalisation précédent, le volume interne 15 du cylindre mobile communique avec le volume intérieur du maître-cylindre à travers un réducteur selectif de débit 22, constitué par exemple d'un clapet anti-retour installé dans le passage 16, et d'un restricteur de débit installé dans le passage 17.

De la sorte, comme on l'a décrit plus haut, en cas de freinage brusque, le clapet anti-retour dans le passage 16 est fermé, le transfert de fluide hydraulique du volume 12 vers le volume 15 se trouve ralenti par la restriction dans le passage 17 et la réaction hydraulique sur le piston hydraulique secondaire 14 retardée, ce qui permet d'améliorer le temps de réponse. Lorsque le conducteur du véhicule met fin à l'action de freinage, le clapet anti-retour disposé dans le passage 16 s'ouvre et permet un retour rapide des différents éléments constituant le servomoteur et le maître-cylindre dans leur position de repos.

## Revendications

1. Dispositif de freinage assisté pour véhicule à moteur, comprenant d'une part un maître-cylindre (2) rempli d'un fluide de freinage et équipé d'un piston hydraulique principal (11) destiné à recevoir une force d'actionnement se composant d'une force d'entrée et d'une force d'assistance agissant toutes deux suivant une direction axiale, et d'autre part un servomoteur pneumatique d'assistance (1) susceptible d'être commandé par application de ladite force d'entrée sur une tige de commande (8) contrôlant l'ouverture d'un clapet (7), pour exercer ladite force d'actionnement sur le piston hydraulique principal, le servomoteur comportant une enveloppe rigide (3) séparée de façon étanche en deux chambres (3a, 3b) au moyen au moins d'une cloison mobile (4), susceptible d'être sollicitée par une différence de pression entre les deux chambres résultant de l'ouverture du clapet et d'entraîner un piston pneumatique (5), mobile par rapport à l'enveloppe, portant ledit clapet et contribuant au moins à transmettre ladite force d'assistance, le piston hydraulique principal (11) du maître cylindre comportant lui-même un cylindre mobile (13), creux, recevant une partie au moins de la force d'assistance, et à l'intérieur duquel coulisse, de façon étanche et suivant la direction axiale, un piston hydraulique secondaire (14) susceptible de recevoir au moins ladite force d'entrée, caractérisée en ce qu'une ouverture au moins (16, 17) est pratiquée dans le cylindre mobile pour faire communiquer l'intérieur (15) de ce dernier avec l'intérieur (12) du maître-cylindre, et en ce qu'un réducteur sélectif de débit (22) est prévu dans cette ouverture pour opposer, à une circulation de fluide de freinage depuis le maître-cylindre vers le cylindre mobile, et à une circulation en sens inverse, des première et seconde pertes de charge respectives dont la première est supérieure à la seconde.

2. Dispositif de freinage suivant la revendication 1, caractérisé en ce que plusieurs ouvertures (16, 17) sont pratiquées dans le cylindre mobile et en ce que le réducteur sélectif de débit est un clapet anti-retour installé sur l'une au moins (16) de ces ouvertures.

3. Dispositif suivant la revendication 2, caractérisé en ce qu'il comprend, entre la tige de commande (8) et le piston hydraulique secondaire (14), une tige de poussée de longueur réglable.

4. Dispositif de freinage selon la revendication 1, dans lequel la force d'entrée est transmise par l'intermédiaire d'un disque de réaction (23) sur lequel s'appuie également le piston pneumatique (5), pour lui fournir une partie au moins de la force d'assistance, caractérisé en ce que le piston hydraulique secondaire (14) est susceptible de recevoir au moins ladite force d'entrée et ladite partie au moins de la force d'assistance en provenance du disque de réaction (23).

5. Dispositif de freinage suivant la revendication 4, caractérisé en ce que plusieurs ouvertures (16, 17) sont pratiquées dans le cylindre mobile et en ce que le réducteur sélectif de débit est un clapet anti-retour installé sur l'une au moins (16) de ces ouvertures.

6. Dispositif suivant la revendication 5, caractérisé en ce qu'il comprend, entre la tige de commande (8) et le piston hydraulique secondaire (14), une tige de poussée de longueur réglable.

## Claims

1. Brake-booster device for a motor vehicle, comprising on the one hand a master cylinder (2) filled with a brake fluid and fitted with a main hydraulic piston (11) designed to receive an actuation force composed of an input force and of a boost force both acting in an axial direction, and on the other hand a pneumatic booster (l) capable of being controlled by application of said input force on a control rod (8) controlling the opening of a valve (7), so as to exert said actuation force on the main hydraulic piston, the booster comprising a rigid casing (3) separated in a leaktight manner into two chambers (3a, 3b) by means of at least one movable partition (4), capable of being acted upon by a pressure differential between the two chambers resulting from the opening of the valve and of driving a pneumatic piston (5), movable with respect to the casing, bearing said valve and contributing at least to transmission of at least a part of said boost force, the main hydraulic piston (11) of the master cylinder itself comprising a hollow, movable cylinder (13), receiving at least part of the boost force, and inside which slides, in a leaktight manner and in the axial direction, a secondary hydraulic piston (14) capable of receiving at least said input force, characterized in that at least one opening (16, 17) is made in the movable cylinder so as to place the interior (15) of the latter in communication with the interior (12) of the master cylinder, and in that a selective flow-rate reducer (22) is provided in this opening in order to oppose, in a circulation of brake fluid from the master cylinder to the movable cylinder, and in a circulation in the reverse direction, respective first and second pressure drops, the first of which is greater than the second.

2. Brake device according to Claim 1, characterized in that several openings (16, 17) are made in the movable cylinder and in that the selective flow-rate reducer is a non-return valve installed on at least one (16) of these openings.

3. Device according to Claim 2, characterized in that it comprises, between the control rod (8) and the secondary hydraulic piston (14), a thrust rod of adjustable length.

4. Device according to Claim 1, wherein the input force is transmitted by means of a reaction disc (23) on which the pneumatic piston also bears to supply at least part of said booster force to it, characterized in that the secondary hydraulic piston (14) is capable of receiving at least said input force and said at least part of the booster force from the reaction disc (23).

5. Brake device according to Claim 4, characterized in that several openings (16, 17) are made in the movable cylinder and in that the selective flow-rate reducer is a non return valve installed on at least one (16) on these openings.

6. Device according to Claim 5, characterized in that it comprises, between the control rod (8) and the secondary piston (14), a thrust rod of adjustable length.

## Patentansprüche

1. Bremsvorrichtung zum unterstützten Bremsen für ein Kraftfahrzeug, die einerseits einen mit einer Bremsflüssigkeit gefüllten Hauptzylinder (2), der mit einem Haupthydraulikkolben (11) ausgestattet ist, der dazu bestimmt ist, eine Betätigungskraft aufzunehmen, die aus einer Eingangskraft und einer Unterstützungskraft zusammengesetzt ist, die alle beide längs einer axialen Richtung wirken, und andererseits einen pneumatischen Hilfsservo (1) aufweist, der durch Aufbringen der Eingangskraft auf eine Steuerstange (8) gesteuert werden kann, die das Öffnen eines Ventils (7) kontrolliert, um die Betätigungskraft auf den Haupthydraulikkolben aufzubringen, wobei der Bremskraftverstärker ein starres Gehäuse (3) aufweist, das dicht in zwei Kammern (3a, 3b) unterteilt ist mittels wenigstens einer beweglichen Trennwand (4), die durch eine Druckdifferenz zwischen den beiden Kammern vorgespannt werden kann, die sich aus dem Öffnen des Ventils ergibt, und die einen bezüglich des Gehäuses beweglichen pneumatischen Kolben (5) antreiben kann, der das Ventil hält und wenigstens zur Übertragung der Unterstützungskraft beiträgt, wobei der Haupthydraulikkolben (11) des Hauptzylinders seinerseits einen beweglichen, hohlen Zylinder (13) aufweist, der wenigstens einen Teil der Unterstützungskraft aufnimmt und in dessen Innerem ein Sekundärhydraulikzylinder (14) dicht und längs der axialen Richtung gleitet, der wenigstens die Eingangskraft aufnehmen kann, dadurch gekennzeichnet, daß wenigstens eine Öffnung (16, 17) in dem beweglichen Zylinder vorgesehen ist, um dessen Innenraum (15) mit dem Innenraum (12) des Hauptzylinders zu verbinden, und daß ein selektiver Durchsatzreduzierer (22) in dieser Öffnung vorgesehen ist, um einem Fließen von Bremsflüssigkeit vom Hauptzylinder zum beweglichen Zylinder und einem Fließen in umgekehrter Richtung einen ersten bzw. einen zweiten Druckverlust entgegenzusetzen, von denen der erste größer als der zweite ist.

2. Bremsvorrichtung nach Anspruch 1, dadurch gekennzeichnet, daß mehrere Öffnungen (16, 17) in dem beweglichen Zylinder vorgesehen sind und daß der selektive Durchsatzreduzierer ein Rückschlagventil ist, das wenigstens an einer (16) dieser Öffnungen eingebaut ist.

3. Vorrichtung nach Anspruch 2, dadurch gekennzeichnet, daß sie zwischen der Steuerstange (8) und dem Sekundärhydraulikkolben (14) eine Schubstange mit einstellbarer Länge aufweist.

4. Bremsvorrichtung nach Anspruch 1, bei welcher die Eingangskraft über eine Reaktionsscheibe (23) übertragen wird, an der auch der pneumatische Kolben (5) anliegt, um ihr wenigstens einen Teil der Hilfskraft zu liefern, dadurch gekennzeichnet, daß der Sekundärhydraulikkolben (14) wenigstens die Eingangskraft und wenigstens den Teil der von der Reaktionsscheibe (23) stammenden Unterstützungskraft aufnehmen kann.

5. Bremsvorrichtung nach Anspruch 4, dadurch gekennzeichnet, daß mehrere Öffnungen (16, 17) in dem beweglichen Zylinder vorgesehen sind und daß der selektive Durchsatzreduzierer ein Rückschlagventil ist, das wenigstens an einer (16) dieser Öffnungen eingebaut ist.

6. Vorrichtung nach Anspruch 5, dadurch gekennzeichnet, daß sie zwischen der Steuerstange (8) und dem Sekundärhydraulikkolben (14) eine Schubstange mit einstellbarer Länge aufweist.
